# EUROPEAN PATENT SPECIFICATION

(11) **EP 1 625 960 B1**
(45) Date of publication and mention of the grant of the patent: **12.12.2007**
(21) Application number: 04103916.5
(22) Date of filing: 13.08.2004
(51) Int. Cl.: B60J 7/043, B60J 7/02

(54) **Roof assembly for a vehicle**
Dachanordnung für ein Fahrzeug
Assemblage d'éléments de toit pour un véhicule

(43) Date of publication of application: 15.02.2006
(73) Proprietor: Inalfa Roof Systems Group B.V., 5804 AH Venray (NL)
(72) Inventor: Zain, Sofiane, 71065 Sindelfingen (DE); Regan, Nicholas James, 3523 PN Utrecht (NL); Van den Corput, Willem Henricus Cornelis, 6512 EN Nijmegen (NL)
(74) Representative: Metman, Karel Johannes

(56) References cited:
- DE-A- 10 002 457
- DE-A- 10 143 823

## Description

The present invention relates to a roof assembly for a vehicle according to the preamble of claim 1.

Such roof assemblies are known in various embodiments. The present trend in such roof systems is that the car manufacturer and the customers require a roof opening which is as large as possible. This may cause problems, especially in roofs which have a pronounced concave shape. In such roof having a concave shape in one or two directions, a large closure element will have a shape that deviates from a rectangular contour. For example, the width of the closure element may be larger at the front than at the rear. When such closure element is moved rearwardly, the wide front of the closure element may cause problems when this arrives in rear positions where it does not fit within the roof opening. Such a roof is shown in DE 100 02 457 A1. In an embodiment in which the closure element is a panel that is moved above the fixed roof, the front end of the panel should then be lifted to such an extent that it is always above the level of the side edges of the roof opening, i.e. above the side finisher. This is undesirable.

Another problem in top slider of spoiler roof assemblies may be that wind noise is created due to the upward and rearward movement of the closure element.

It is an object of the present invention to provide a roof assembly for a vehicle in which this problem is removed or at least reduced.

For this purpose the roof assembly according to the invention has the features of the characterizing portion of claim 1.

By making the side finishers movable, their height position can be adapted to the position of the closure element when it is moved to an open position. Due to the coupling, an automatic movement of the side finishers is caused by the movements of the closure element. This coupling may be mechanical or electrical, for example. By the movement of the side finisher it is possible to avoid interference between the closure element and the side finisher, especially if the closure element or fixed roof has an irregular shape, by moving the side finisher out of the way. On the other hand, the side finisher may be moved in vertical sense to follow movements of the closure element in order to keep a close relationship between closure element and side finisher to prevent wind noises and to improve the appearance of the open roof.

The invention is particularly useful in a roof assembly that is constructed as a top slider, spoiler roof or the like wherein the operating mechanism is adapted to move the rear edge of the closure element upwardly when the closure element is moved to its open position, the side finisher being then adapted to move in vertical sense.

In this way, if the side finishers are moved downwardly, the front of the closure element may be kept at a low level and the side edges of the front of the closure element can then move over the side finisher which is locally (when the side finisher is flexible) bent downwardly or is moved as a whole. In a preferred embodiment, a spring mechanism biases each side finisher to its releasing position, while a movable support for each side finisher is provided with the coupling so as to support the side finisher in the closed position of the closure element and withdraw the support when opening the closure element.

In this way there is created a very simple structure to move the side finisher to its releasing position, while also the coupling between the closure element and the side finisher may be kept simple.

Preferably, the side finisher is pivotally supported. In this embodiment, the side finisher may be pivotable around an axis which extends substantially in longitudinal direction of the side finisher or substantially in transverse direction of the side finisher.

In an alternative embodiment, the coupling comprises a forcing guide, a first forcing guide part being provided on the side finisher and a second forcing guide part being provided on a member, such as a sliding shoe, sliding with the closure element. In this way, there is a direct engagement between the operating mechanism of the closure element and the side finisher, in which there may be a fixed relationship between the longitudinal position of the member and the position of the side finisher.

In this embodiment a variety of movements can be created, either moving away from the closure element to give way, or following the closure element to maintain the unity there between. Complex movements of the side finishers during movements of the closure element are conceivable.

The invention will be explained in more detail hereafter with reference to the drawings, which schematically show embodiments of the roof assembly according to the invention.
Fig. 1 is a transparent plan view of a vehicle roof comprising an embodiment of the roof assembly according to the invention.
Fig. 2 is a very schematic enlarged sectional view according to the line II-II in Fig. 1.
Fig. 3 is a view similar to that of Fig. 2 but showing the closure element and side finisher in different positions.
Fig. 4 is a very schematic side view of an alternative coupling between the closure element and the side finisher.

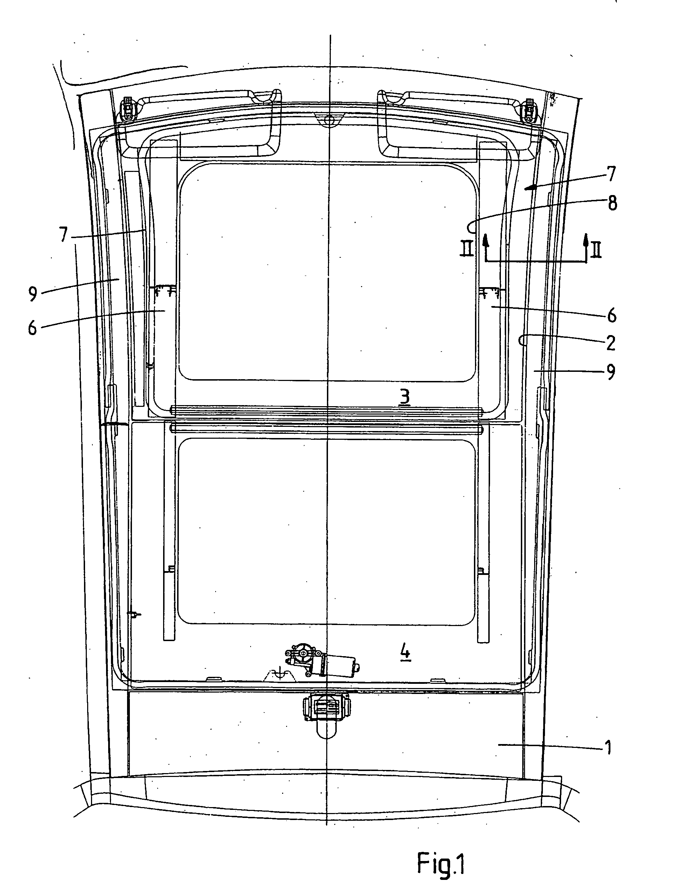

The drawings, in particular Fig. 1 thereof, show a fixed roof 1 of a vehicle, such as a passenger car, which is provided with a roof opening 2 for receiving a roof assembly. The roof assembly includes at least one closure element 3 for selectively closing or at least partially releasing the roof opening 2. In this embodiment, the closure element 3 is a rigid panel, in particular a transparent panel of glass or plastic material, but also other closure elements such as slats or a flexible cover are conceivable. In the illustrated embodiment, a spoiler roof or top slider is used, wherein panel 3 can be moved from the closed position in the roof opening 2 to an upwardly and rearwardly moved position above the level of the fixed roof 1. Also other embodiments of the roof assembly are possible, such as a sliding-tilt roof in which the panel is moved downwardly and then rearwardly below the fixed roof.

In the embodiment shown, the roof assembly comprises a second, rear panel 4 which is situated behind the panel 3 when they are both in the closed position. The second panel 4 may be fixed or may be movable as well.

In order to enable the movements of the panel 3, it is fitted with an operating mechanism (not shown) at both edges extending in the longitudinal direction of the roof assembly, said operating mechanisms are slidably accommodated in a guideway of guide rails 6. These guide rails 6 are mounted on or form part of a stationary part, for example a frame 7, which is attached to or forms part of the fixed roof 1 of the vehicle. The guide rails 6 extend along the longitudinal extending edges of the roof opening 2 and also outwardly along a passage opening 8 in the frame 7 which forms the connection with the interior of the vehicle. Positioned next to the longitudinal sides of the panels 3 and 4 are side finishers 9, which close the space between the sides of the panels 3 and 4 and the cant rail of the vehicle roof.

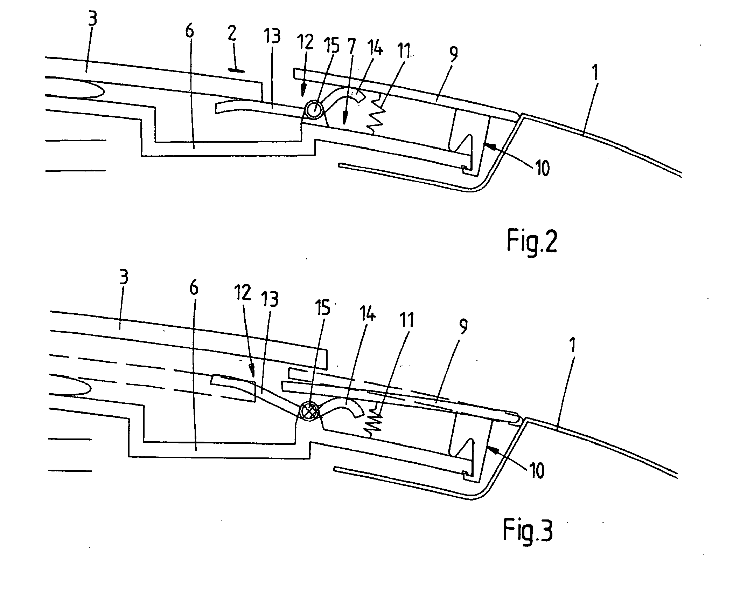

Figs. 2 and 3 very schematically show the movable support of one of the side finishers 9. Shown is the fixed roof 1, the roof opening 2, the panel 3, the guide rail 6 and the frame 7. The side finisher 9 is supported on its lateral outer side by means of a pivotal structure allowing a limited pivoting movement of the side finisher around an axis extending in longitudinal direction of the roof assembly/vehicle. A spring member 11 or other biasing mechanism is provided to exert a biasing force on the side finisher 9 in a direction to a downwardly moved releasing position (shown in Fig. 3). In this releasing position, the front edges of the panel 3 are allowed to move over the respective side finishers 9 thereby obviating the need to raise the front of the panel above the level of the side finishers.

To support the side finisher 9 in the closing position, there is provided a movable support which is provided with a coupling so as to support the side finisher in the closed position of the panel 3 and to withdraw the support when opening the panel 3. The support and coupling comprise a lever 12 having first and second lever arms 13 and 14 and a pivot 15 in between. The pivot 15 is supported on the frame 7. The short lever arm 14 is rounded to provide a stable point of engagement for the side finisher 9, whereas the other lever arm 13 is in engagement with some part of the operating mechanism for the panel 3 that moves upward with the panel 3 when the panel 3 is moved to the open position. By raising the lever arm 13, the lever arm 14 is lowered and the side finisher 9 will follow the lever arm 14 due to the downward biasing force of the spring 11. When the panel 3 returns to the closed position, the lever arm 13 will be moved downwardly again thereby raising the lever arm 14 and bringing the side finisher 9 back to the closing position (Fig. 2) against the force of the spring 11. In this manner, the lever 12 provides not only a movable support for the side finisher 9, but also a coupling between the movements of the panel 3 and the movements of the side finisher 9.

Alternatively, it is also possible that the side finisher 9 is pivotable about a transverse pivoting axis, wherein the pivoting axis may be positioned near the rear end of the side finisher or between the ends thereof. It is of course also conceivable that the side finisher is movable in a transitory fashion, so that the whole side finisher is allowed to move up and down.

As a further alternative or in addition it is possible that the side finisher 9 is made of a flexible material or has a flexible structure. In this case, only the part of the side finisher 9 that has to be moved out of the way is moved due to the coupling between the panel 3 and the side finisher 9. Generally, this part of the side finisher 9 is moved by bending and the elasticity in the side finisher will bring the side finisher 9 back to the closing position when the panel 3 is moved to the closed position.

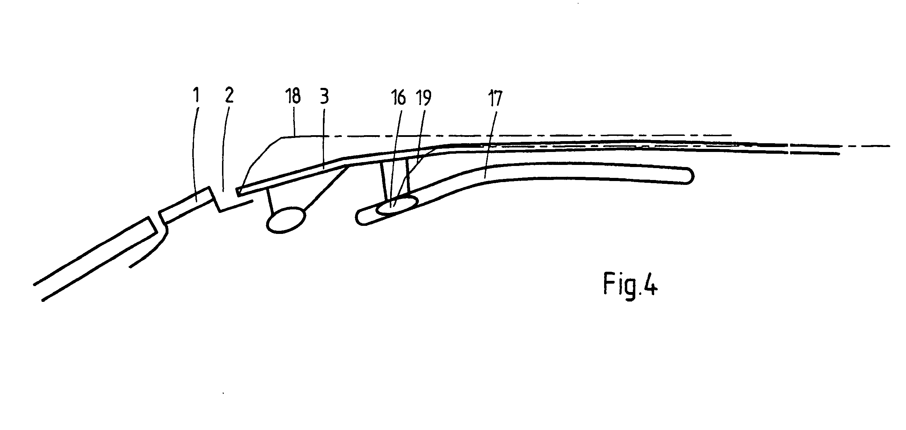

Fig. 4 very schematically shows a further alternative arrangement in which the longitudinal displacement between the panel 3 and/or its operating mechanism and the side finisher 9 causes the side finisher 9 to move up and down. For this purpose, the panel 3 and/or operating mechanism is provided with a guide member 16, such as a slide shoe, guide pin or the like, which is in engagement with a guide track or guide curve 17 connected to the side finisher 9. The profile of the curve or track 17 determines the upward/downward movement of the side finisher 9. In the embodiment shown, the front of the panel 3 makes an upward movement when the panel is opened. This is indicated by dash line 18. The guide member 16 makes a similar movement indicated by dash line 19, and the side finisher moves as a function of the movement of the guide member 16 and the curvature of the guide curve 17 through which the guide member 16 travels. Of course, it would also be conceivable to have a guide member connected to the side finisher and a guide track or curve connected to the operating mechanism for the panel.

From the foregoing it will be apparent that the invention provides a roof assembly for a vehicle which enables large roof openings in curved roofs without requiring special movements of the closure element to open it, thereby making it possible to use standard operating mechanisms which are also used for roof assemblies comprising smaller roof openings.

The invention is not restricted to the above-described embodiment as shown in the drawing, which can be varied in several ways without departing from the scope of the invention. For example, it is possible that the coupling between the closure element and the side finisher is such that the side finisher follows upward movements of the closure element from the closed position in order to maintain, for example, a substantially flush relationship.

## Claims

1. A roof assembly for a vehicle having an opening (2) in its fixed roof (1), comprising a stationary part (7) to be fixed to the roof, which includes at least one guide rail (6) extending in the longitudinal direction of the roof assembly, an adjustable closure element (3) supported by said stationary part, which is adjustable at least between a closed position, in which it closes the roof opening, and an open position, in which at least the rear edge of the closure element is moved out of the roof opening and the whole closure element is moved backwardly, an operating mechanism for adjustably supporting said closure element (3), and side finishers (9) for filling a space between the closure element and an adjacent cant rail of the fixed roof when the roof assembly is mounted to the fixed roof, **characterized in that** each side finisher (9) is movably supported such that at least a portion of the side finisher is movable from a closing position to a releasing position to be adapted to the closure element (3) when it is moved to its open position, a coupling (12) being provided to couple movements of the side finisher (9) to movements of the closure element (3).

2. A roof assembly according to claim 1, constructed as a top slider, spoiler roof or the like wherein the operating mechanism is adapted to move the rear edge of the closure element (3) upwardly when the closure element is moved to its open position, the side finishers (9) being adapted to move in vertical sense.

3. A roof assembly according to claim 1 or 2, wherein a spring mechanism (11) biases each side finisher (9) to its releasing position, while a movable support for the side finisher is provided with the coupling (12) so as to support the side finisher in the closed position of the closure element (3) and withdraw the support when opening the closure element.

4. A roof assembly according to claim 3, wherein the support and coupling comprise a lever (12) having first and second lever arms (13, 14) and a pivot (15) in between, the first lever arm (14) acting as support for the side finisher (9), the second lever arm (13) acting as coupling adapted to be engaged by a part connected to the closure element (3) at least in the closed position thereof.

5. A roof assembly according to claim 1 or 2, wherein the coupling comprises a forcing guide (16, 17), a first forcing guide part (17) being provided on the side finisher (9) and a second forcing guide part (16) being provided on a member, such as a sliding shoe, sliding with the closure element (3), said first forcing guide part (17) being preferably a guide member and the second forcing guide part (18) being a guide curve in which the guide member slidably engages.

6. A roof assembly according to one of the preceding claims, wherein the closure element (3) is a rigid panel which is convexly shaped and which is wider at its front edge than at its rear edge, and wherein the support and coupling for the side finisher is adapted to move downwardly when the closure element is moved rearwardly.

7. A roof assembly according to one of the preceding claims, wherein each side finisher (9) is pivotally supported.

8. A roof assembly according to claim 7, wherein each side finisher (9) is pivotable around an axis which extends substantially in longitudinal direction of the side finisher.

9. A roof assembly according to claim 7, wherein each side finisher (9) is pivotable around an axis which extends substantially in transverse direction of the side finisher.

10. A roof assembly according to any one of the preceding claims, wherein each side finisher (9) is at least partly flexible such that at least a part of the movements of the side finisher is enabled by the flexibility of the side finisher.

11. A vehicle having an opening (2) in its fixed roof (1), comprising a roof assembly having a stationary part (7) fixed to the roof, which includes at least one guide rail (6) extending in the longitudinal direction of the roof assembly, an adjustable closure element (3) supported by said stationary part, which is adjustable at least between a closed position, in which it closes the roof opening, and an open position, in which at least the rear edge of the closure element is moved out of the roof opening and the whole closure element is moved backwardly, an operating mechanism for adjustably supporting said closure element (3), and side finishers (9) for filling a space between the closure element and an adjacent cant rail of the fixed roof, **characterized in that** each side finisher (9) is movably supported such that at least a portion of the side finisher is movable from a closing position to a releasing position to be adapted to the closure element (3) when it is moved to its open position, a coupling (12) being provided to couple movements of the side finisher (9) to movements of the closure element (3).

## Patentansprüche

1. Dachanordnung für ein Fahrzeug mit einer Öffnung (2) in dessen Festdach (1), aufweisend ein an dem Festdach zu befestigendes, stationäres Teil (7), das mindestens eine Führungsschiene (6) aufweist, die sich in Längsrichtung der Dachanordnung erstreckt, ein von dem stationären Teil abgestütztes, verstellbares Schließelement (3), das wenigstens zwischen einer Schließposition, in welcher es die Dachöffnung schließt, und einer Offenposition verstellbar ist, in welcher wenigstens der Rückwärtsrand des Schließelements aus der Dachöffnung heraus bewegt wird und das gesamte Schließelement rückwärts bewegt wird, einen Betätigungsmechanismus zum verstellbaren Abstützen des Schließelements (3) und Seitenabschlüsse (9) zum Auffüllen eines Raumes zwischen dem Schließelement und einer benachbarten Kappschiene des Festdaches, wenn die Dachanordnung an dem Festdach montiert ist, **dadurch gekennzeichnet, dass** jeder Seitenabschluss (9) bewegbar abgestützt wird, so dass mindesten ein Abschnitt des Seitenabschlusses aus einer Schließposition zu einer Freigabeposition zur Anpassung an das Schließelement (3) bewegbar ist, wenn es in seine Offenposition bewegt wird, wobei eine Kupplung (12) zum Koppeln von Bewegungen des Seitenanschlusses (9) an Bewegungen des Schließelements (3) vorgesehen ist.

2. Dachanordnung gemäß Anspruch 1, die als ein Schiebedach oder als ein Hebe- und Schiebedach oder dergleichen konstruiert ist, wobei der Betätigungsmechanismus zum Aufwärts-Bewegen des Rückwärtsrandes des Schließelements (3) angepasst ist, wenn das Schließelement in seine Offenposition bewegt wird, wobei der Seitenabschluss (9) zum Bewegen in Vertikalrichtung angepasst ist.

3. Dachanordnung gemäß Anspruch 1 oder 2, wobei ein Federmechanismus (11) jeden Seitenabschluss (9) in seine Freigabeposition vorspannt, wobei eine bewegbare Abstützung für den Seitenabschluss mit der Kupplung (12) vorgesehen ist, so dass der Seitenabschluss in der Schließposition des Schließelements (3) abgestützt wird und die Abstützung zurückgezogen wird, wenn das Schließelement geöffnet wird.

4. Dachanordnung gemäß Anspruch 3, wobei die Abstützung und die Kupplung einen Hebel (12) mit ersten und zweiten Hebelarmen (13, 14) und einem Gelenk (15) dazwischen aufweist, wobei der erste Hebelarm (14) als Abstützung für den Seitenabschluss (9) wirkt, wobei der zweite Hebelarm (13) als Kupplung wirkt, die zum In-Eingriff-Kommen mit einem Teil angepasst ist, das an dem Schließelement (3) wenigsten in der Schließposition davon angeschlossen ist.

5. Dachanordnung gemäß Anspruch 1 oder 2, wobei die Kupplung eine Zwangsführung (16, 17), ein erstes Zwangsführungsteil (17), welches an dem Seitenabschluss (9) vorgesehen ist, und ein zweites Zwangsführungsteil (16) aufweist, das an einem Element, wie einem Gleitschuh, vorgesehen ist, das mit dem Schließelement (3) verschoben wird, wobei das erste Zwangsführungsteil (17) vorzugsweise ein Führungselement ist und das zweite Zwangsführungsteil (18) eine Führungskurve ist, mit welcher das Führungselement im verschiebbaren Eingriff steht.

6. Dachanordnung gemäß einem der vorherigen Ansprüche, wobei das Schließelement (3) ein starres Panel ist, welches konvexförmig ist und welches an seinem Vorwärtsrand breiter als an seinem Rückwärtsrand ist, und wobei die Abstützung und die Kupplung für den Seitenabschluss zum Abwärtsbewegen angepasst ist, wenn das Schließelement rückwärts bewegt wird.

7. Dachanordnung gemäß einem der vorherigen Ansprüche, wobei jeder Seitenabschluss (9) schwenkbar abgestützt ist.

8. Dachanordnung gemäß Anspruch 7, wobei jeder Seitenabschluss (9) um eine Achse herum schwenkbar ist, die sich im Wesentlichen in Längsrichtung des Seitenabschlusses erstreckt.

9. Dachanordnung gemäß Anspruch 7, wobei jeder Seitenabschluss (9) um eine Achse herum schwenkbar ist, welche sich im Wesentlichen in Querrichtung des Seitenabschlusses erstreckt.

10. Dachanordnung gemäß einem der vorherigen Ansprüche, wobei jeder Seitenabschluss (9) wenigstens teilweise flexibel ist, so dass wenigsten ein Teil der Bewegungen des Seitenabschlusses durch die Flexibilität des Seitenabschlusses ermöglicht wird.

11. Fahrzeug mit einer Öffnung (2) in seinem Festdach (1), aufweisend eine Dachanordnung, die ein an dem Dach befestigtes, stationäres Teil (7) aufweist, das mindestens eine Führungsschiene (6) aufweist, die sich in Längsrichtung der Dachanordnung erstreckt, ein von dem stationären Teil abgestütztes, verstellbares Schließelement (3), das wenigstens zwischen einer Schließposition, in welcher es die Dachöffnung schließt, und einer Offenposition verstellbar ist, in welcher wenigstens der Rückwärtsrand des Schließelements aus der Dachöffnung heraus bewegt wird und das gesamte Schließelement rückwärts bewegt wird, einen Betätigungsmechanismus zum verstellbaren Abstützen des Schließelements (3) und Seitenabschlüsse (9) zum Auffüllen eines Raumes zwischen dem Schließelement und einer benachbarten Kappschiene des Festdaches, **dadurch gekennzeichnet, dass** jeder Seitenabschluss (9) bewegbar abgestützt wird, so dass mindestens ein Abschnitt des Seitenabschlusses aus einer Schließposition zu einer Freigabeposition zur Anpassung an das Schließelement (3) bewegbar ist, wenn es in seine Offenposition bewegt wird, wobei eine Kupplung (12) zum Koppeln von Bewegungen des Seitenanschlusses (9) an Bewegungen des Schließelements (3) vorgesehen ist.

## Revendications

1. Assemblage d'éléments de toit pour un véhicule comportant une ouverture (2) dans son toit fixe (1), comprenant une partie stationnaire (7) à fixer sur le toit, qui comprend au moins une glissière de guidage (6) s'étendant dans la direction longitudinale de l'assemblage d'éléments de toit, un élément de fermeture ajustable (3) supporté par ladite partie stationnaire, qui est ajustable au moins entre une position fermée dans laquelle il ferme l'ouverture de toit et une position ouverte dans laquelle au moins le bord arrière de l'élément de fermeture est déplacé hors de l'ouverture de toit et l'ensemble d'éléments de fermeture est déplacé vers l'arrière, un mécanisme opérant destiné à supporter de façon ajustable ledit élément de fermeture (3), et des éléments de finition latéraux (9) pour remplir un espace entre l'élément de fermeture et une glissière biseautée contiguë du toit fixe lorsque l'assemblage d'éléments de toit est monté sur le toit fixe,
**caractérisé en ce que** chaque élément de finition latéral (9) est supporté de façon mobile de telle sorte qu'au moins une portion de l'élément de finition latéral est déplaçable à partir d'une position de fermeture vers une position de libération pour être adaptée à l'élément de fermeture (3) lorsque celui-ci est déplacé vers sa position ouverte, un accouplement (12) étant prévu pour accoupler les mouvements de l'élément de finition latéral (9) aux mouvements de l'élément de fermeture (3).

2. Assemblage d'éléments de toit selon la revendication 1, construit en tant que glissière supérieure, toit déflecteur ou analogue dans lequel le mécanisme opérant est apte à déplacer le bord arrière de l'élément de fermeture (3) vers le haut lorsque l'élément de fermeture est déplacé vers sa position ouverte, les éléments de finition latéraux (9) étant aptes à se déplacer dans le sens vertical.

3. Assemblage d'éléments de toit selon la revendication 1 ou 2, dans lequel un mécanisme à ressort (11) précontraint chaque élément de finition latéral (9) sur sa position de libération, tandis qu'un support mobile pour l'élément de finition latéral est équipé de l'accouplement (12), de façon à supporter l'élément de finition latéral dans la position fermée de l'élément de fermeture (3) et retirer le support au moment de l'ouverture de l'élément de fermeture.

4. Assemblage d'éléments de toit selon la revendication 3, dans lequel le support et l'accouplement comprennent un levier (12) présentant des premier et second bras de levier (13, 14) et un pivot (15) intermédiaire, le premier bras de levier (14) agissant comme support pour l'élément de finition latéral (9), le second élément de levier (13) agissant comme accouplement apte à être mis en prise par une partie connectée à l'élément de fermeture (3) au moins dans la position fermée de celui-ci.

5. Assemblage d'éléments de toit selon la revendication 1 ou 2, dans lequel l'accouplement comprend un guidage forcé (16, 17), une première partie de guidage forcé (17) étant prévue sur l'élément de finition latéral (9) et une seconde partie de guidage forcé (16) étant prévue sur un élément tel qu'un patin coulissant, coulissant avec l'élément de fermeture (3), ladite première partie de guidage de forçage (17) étant de préférence un élément de guidage et la seconde partie de guidage de forçage (18) étant une courbe de guidage dans laquelle l'élément de guidage s'engage par coulissement.

6. Assemblage d'éléments de toit selon l'une des revendications précédentes, dans lequel l'élément de fermeture (3) est un panneau rigide qui est de configuration convexe et qui est plus large sur son bord frontal que sur son bord arrière, et dans lequel le support et l'accouplement pour l'élément de finition latéral est apte à se déplacer vers le bas lorsque l'élément de fermeture est déplacé vers l'arrière.

7. Assemblage d'éléments de toit selon l'une des revendications précédentes, dans lequel chaque élément de finition latéral (9) est supporté de façon pivotante.

8. Assemblage d'éléments de toit selon la revendication 7, dans lequel chaque élément de finition latéral (9) peut pivoter autour d'un axe qui s'étend sensiblement dans la direction longitudinale de l'élément de finition latéral.

9. Assemblage d'éléments de toit selon la revendication 7, dans lequel chaque élément de finition latéral (9) peut pivoter autour d'un axe qui s'étend sensiblement dans la direction transversale de l'élément de finition latéral.

10. Assemblage d'éléments de toit selon l'une quelconque des revendications précédentes, dans lequel chaque élément de finition latéral (9) est au moins partiellement flexible, de façon à ce qu'au moins une partie des mouvements de l'élément de finition latéral soit rendue possible par la souplesse de l'élément de finition latéral.

11. Véhicule présentant une ouverture (2) dans son toit fixe (1), comprenant un assemblage d'éléments de toit comportant une partie stationnaire (7) fixée sur le toit, qui comprend au moins une glissière de guidage (6) s'étendant dans la direction longitudinale de l'assemblage d'éléments de toit, un élément de fermeture ajustable (3) supporté par ladite partie stationnaire, qui est ajustable au moins entre une position fermée dans laquelle il ferme l'ouverture de toit et une position ouverte dans laquelle au moins le bord arrière de l'élément de fermeture est déplacé hors de l'ouverture de toit et l'ensemble de l'élément de fermeture est déplacé vers l'arrière, un mécanisme opérant destiné à supporter de façon ajustable ledit élément de fermeture (3), et des éléments de finition latéraux (9) pour remplir un espace entre l'élément de fermeture et une glissière biseautée contiguë du toit fixe,
**caractérisé en ce que** chaque élément de finition latéral (9) est supporté de façon mobile de telle sorte qu'au moins une portion de l'élément de finition latéral peut être déplacée à partir d'une position de fermeture vers une position de libération pour être adaptée à l'élément de fermeture (3) lorsque celui-ci est déplacé vers sa position ouverte, un accouplement (12) étant prévu pour accoupler les mouvements de l'élément de finition latéral (9) aux mouvements de l'élément de fermeture (3).
